# EUROPÄISCHE PATENTSCHRIFT

(11) **EP 0 706 316 B1**
(45) Veröffentlichungstag und Bekanntmachung des Hinweises auf die Patenterteilung: **27.08.1997**
(21) Anmeldenummer: 94920377.2
(22) Anmeldetag: 27.06.1994
(51) Int. Cl.: A01K 77/00

(54) **KESCHER, INSBESONDERE FÜR DEN FISCHFANG**
LANDING NET, ESPECIALLY FOR FISHING
EPUISETTE, NOTAMMENT POUR LA PECHE

(30) Priorität: 28.06.1993 DE 9309761 U; 13.06.1994 DE 9410167 U
(43) Veröffentlichungstag der Anmeldung: 17.04.1996
(73) Patentinhaber: NETZBAU BESTENSEE ANGELSPORTGERÄTE GmbH & CO. KG, D-15741 Bestensee (DE)
(72) Erfinder: SCHOLZ, Ernst, D-15806 Kallinchen (DE); SETTMACHER, Lutz, D-15749 Mittenwalde (DE)
(74) Vertreter: Röhnicke, Heinz
(86) Internationale Anmeldenummer: DE9400771
(87) Internationale Veröffentlichungsnummer: WO9500013

(56) Entgegenhaltungen:
- GB-A- 423 388
- GB-A- 1 043 364
- GB-A- 1 545 476
- GB-A- 2 156 192
- US-A- 4 870 773

## Beschreibung

Die Erfindung bezieht sich auf einen Kescher, insbesondere für den Fischfang, welcher Bügelstabe, einen Verbindungsstab, einen Netzbeutel sowie ein Anschlußstück aufweist, wobei in der Gebrauchsstellung die Bügelstäbe mit ihren unteren Enden mit dem Anschlußstück kraft- und/oder formschlüssig und durch dasselbe miteinander verbunden sind sowie mit ihren oberen Enden, dem Anschlußstück gegenüberliegend, über jeweils ein Klappgelenk mit dem Verbindungsstab verbunden sind und bis zur vorbestimmten Breite des Keschers eine von dem Anschlußstück in Richtung des Verbindungsstabes V-förmig auseinandergehende Stellung einnehmen, wobei in der Transportstellung die Bügelstäbe an ihren unteren Enden voneinander gelost sind und über die Klappgelenke an ihren oberen Enden parallel zu dem Verbindungsstab gelegt sind.

In dem GB-A-2 156 192 ist ein Kescher beschrieben, der zwei Arme zur Aufnahme des Netzes aufweist. An dem unteren Ende der Arme sind rechtwinklig zwei Drehbolzen angeordnet. Mittels dieser Drehbolzen sind die Arme schwenkbar um deren Längsachse in einem Anschlußstück gelagert. Das Anschlußstück weist zwei seitlich angeordnete V-förmige Halterungen auf, an denen die Arme in der Gebrauchsstellung des Keschers anliegen. In dieser Stellung sind sie durch einen Formblock gehalten, der die gleiche V-Form wie die V-förmige Halterung besitzt. Die Arme liegen dabei in einer eine Bohrung bildenden Ausnehmung der V-förmigen Halterung und des Formblocks. An dem Formblock ist ein Gewindestift angeordnet. Dieser ragt durch eine Bohrung des Formblocks. Durch Festschrauben des Stockes des Keschers wird der Formblock in die V-förmige Halterung gezogen und fixiert dadurch die Arme des Keschers in ihre V-förmige Stellung.

Nach dem Losen des Formblocks, durch Losdrehen des Stockes, wird dieser um 90° geschwenkt und die Arme können in eine parallele Transportstellung gebracht werden.

Zwischen den vorderen Enden der Arme ist eine Schnur angeordnet welche die Vorderseite des auf die Arme aufgeschobenen Netzbeutels trägt. Die Schwenkbewegung der Arme wird durch die Schnur nicht behindert. Die Anordnung einer Schnur zwischen den vorderen Enden der Arme des Keschers ist eine übliche Ausbildung.

Beim Angelsport ist es erforderlich, am Angelhaken hängende Fische in Ufernähe mit einem Kescher aufzunehmen. Für große und kampfstarke Fische, wie sie besonders gefangen werden sollen, ist dabei auch ein Kescher mit einem großen oberen Durchmesser des Netzbeutels notwendig. So ist es durchaus möglich, Kescher zu verwenden, deren Arme eine Länge von 60 cm und mehr aufweisen. Bei derartig großen Keschern ist eine Schnur zum vorderen Abschluß des Keschers beim Fangen von Fischen, insbesondere großen und kampfstarken Fischen, eine große Gefahrenquelle. In der Nähe des Keschers kämpft der Fisch häufig noch einmal stark, und bei dem Abschluß durch eine Schnur, insbesondere bei einer großen Netzöffnung, passiert es häufig, daß der Fisch bei einem Lösen des Hakens über die Schnur entkommt.

Dieses wird durch die instabile Konstruktion begünstigt, da die Arme des Keschers in einem Anschlußstück schwenkbar gelagert sind und ihre Enden frei nach oben ragen.

Durch die GB-A-423 388 ist ein Kescher bekannt dessen vorderer Abschluß ein Querstab, mit abgewinkelten äußeren Enden, bildet. An ihm sind seitliche Arme, schwenkbar befestigt. Dabei sind die Endbereiche der äußeren Enden des Querstabes und der Arme abgeflacht und aufeinanderliegend auf einem Bolzen drehbar gelagert. Eine derartige Verbindung ist nur relativ gering belastbar, so daß die Vorteile eines festen Querstabes, für einen stabilen vorderen Abschluß des Keschers, nicht genutzt werden können.

Am hinteren Ende des Keschers ist quer ein lösbares Verbindungsstück angeordnet an dem sich an einem Arm ein Gewindebolzen und an dem anderen Arm eine Überwurfmutter befindet, wodurch die hinteren Enden der Arme miteinander verbunden oder voneinander gelöst werden können. In dem Gewindebolzen ist ein Schlitz vorgesehen in dem eine, an dem anderen Arm befestigte, Zunge eingreift um ein Verdrehen der Arme beim Verschrauben oder Lösen des Gewindes zu vermeiden. Mit einem derartigen Verbindungsstück ist ein Verbinden oder Trennen der Arme und damit die Montage und Demontage des Keschers schwierig.

Der Erfindung liegt die Aufgabe zugrunde einen Kescher, insbesondere für den Fischfang, welcher Bügelstäbe, einen Verbindungsstab, einen Netzbeutel sowie ein Anschlußstück aufweist, wobei in der Gebrauchsstellung die Bügelstäbe mit ihren unteren Enden mit dem Anschlußstück kraft- und/oder formschlüssig und durch dasselbe miteinander verbunden sind sowie mit ihren oberen Enden, dem Anschlußstück gegenüberliegend, über jeweils ein Klappgelenk mit dem Verbindungsstab verbunden sind und bis zur vorbestimmten Breite des Keschers eine von dem Anschlußstück in Richtung des Verbindungsstabes V-förmig auseinandergehende Stellung einnehmen, wobei in der Transportstellung die Bügelstäbe an ihren unteren Enden voneinander gelöst sind und über die Klappgelenke an ihren oberen Enden parallel zu dem Verbindungsstab gelegt sind, zu schaffen, welcher auch bei einer großen Netzöffnung und einem vorderen festen Verbindungsstab eine sichere Befestigung der Bügelstäbe in dem Anschlußstück in der Gebrauchsstellung sowie ein leichtes Lösen und damit ein einfaches Zusammenlegen in die Transportstellung ermöglicht.

Erfindungsgemäß wird die Aufgabe dadurch gelöst, daß das Anschlußstück zwei Teile, mit jeweils einem Winkelstuck, aufweist, wobei in jedem Winkelstuck ein Bügelstab, mit seinem unteren Ende, fest angeordnet ist und die Bügelstäbe durch die Winkelstücke in einem vorbestimmten Winkel, entsprechend der V-förmig auseinander gehenden Stellung, fixiert sind, wobei zur formschlüssigen Verbindung der Teile des Anschlußstückes, ein Teil des Anschlußstückes, das andere Teil seitlich übergreifend ausgebildet ist und in dem seitlich übergreifenden Teil, auf der dem Winkelstück gegenüberliegenden Seite, eine Schräge angeordnet ist an der das andere Teil mit seinem Winkelstück anliegt und die kraftschlüssige Verbindung durch einen vertikal angeordneten Gewindebolzen und einem, an seinem vorderen Ende, mit einem Gewindestück versehenen Stock des Keschers erfolgt, wobei der Gewindebolzen in dem seitlich übergreifenden Teil fest angeordnet ist und durch eine Öffnung im zweiten Teil nach unten hindurchragt.

Vorzugsweise bestehen die Bügelstäbe und der Verbindungsstab aus einem faserverstärkten Kunststoff, der es ermöglicht, einen leichten Kescher mit hoher Festigkeit auszubilden.

Durch die Winkelstücke des Anschlußstückes erhält der Kescher die gewünschte Form, auch bei dem Einsatz von geraden Bügelstäben. Dabei ist das Anschlußstück durch die großen Anlageflächen seiner Teile stabil und auch bei großen Keschern einsetzbar.

Eine weitere Ausbildung der Erfindung besteht in der Kombination folgender Merkmale:
- das Anschlußstück ist einteilig ausgebildet und weist eine feste Bügelaufnahme sowie eine freie Bügelaufnahme auf;
- in der festen Bügelaufnahme des Anschlußstückes ist einer der Bügelstäbe mit seinem unteren Ende befestigt;
- in der freien Bügelaufnahme des Anschlußstückes ist der zweite Bügelstab mit seinem freien unteren Ende über eine Steckverbindung lösbar angeordnet;
- die Steckverbindung ist durch eine in dem freien Ende des Bügelstabes angeordnete Feder, vorzugsweise eine gebogene Blattfeder, auf deren einem Schenkel ein durch eine seitliche Öffnung im Bügelstab ragender Druckknopf befestigt ist, wobei der andere Schenkel der Feder an der gegenüberliegenden Innenseite des Bügelstabes anliegt, sowie eine in der freien Bügelaufnahme des Anschlußstückes angeordnete Öffnung gebildet, wobei in der Gebrauchsstellung in diese Öffnung der Druckknopf eingreift und den Bügelstab in seiner Lage fixiert;
- die Bügelstäbe einen sich von dem Anschlußstück bis zum Erreichen einer vorbestimmten Breite des Keschers seitlich nach oben erstreckenden V-förmigen Abschnitt aufweisen, an dem sich ein gerader Abschnitt anschließt, der parallel zur Längsachse des Keschers verläuft, wobei die geraden Abschnitte beider Bügelstäbe einen gleichen Abstand zu der Längsachse aufweisen.

Durch die einteilige Ausbildung des Anschlußstückes mit einer Steckverbindung ist eine einfache Montage oder Demontage des Keschers möglich und eine sichere Verbindung gewährleistet.

Zweckmäßigerweise besteht bei dieser Lösung der die Bügelstäbe an ihren oberen Enden über die Klappgelenke verbindende Verbindungsstab aus einem den vorderen Abschluß des Bügels des Keschers bildenden Querstab und an dessen Enden in Richtung der Bügelstäbe rechtwinklig abgebogenen Schenkeln, die sich axial zu den geraden Abschnitten der Bügelstäbe erstrecken.

Die Bügelstäbe und der Verbindungsstab können aus einem Leichtmetallrohr bestehen. Ein derartiger Kescherbügel ist bei einem geringen Gewicht sehr biegesteif.

Vorzugsweise weist das Klappgelenk ein U-förmiges Teil und ein weiteres Teil auf, wobei das U-förmige Teil als ein Lager zur Aufnahme des Teiles ausgebildet ist, das zwischen die Schenkel des U-förmigen Teiles gesteckt und schwenkbar auf einem in den Schenkeln befestigten Lagerbolzen angeordnet ist, wobei eines der Teile an dem Verbindungsstab und das andere Teil an dem Bügelstab angeordnet ist.

Das Klappgelenk kann als eine Eckverbindung zwischen dem Verbindungsstab und den Bügelstäben ausgebildet sein, wobei das in das U-förmige Teil eingreifende Teil winkelförmig entlang der sich im Bereich der Eckverbindung kreuzenden Längsachsen des Verbindungsstabes und der Bügelstäbe gebogen ist.

Damit können der Verbindungsstab und die Bügelstäbe als gerade Stäbe aus faserverstärktem Kunststoff verwendet werden.

Es ist vorteilhaft, wenn der Verbindungsstab oder der Querstab des Verbindungsstabes gleich lang oder länger als der Bügelstab ist.

Die erfindungsgemäße Lösung ermöglicht es, große Kescher auszubilden, bei denen der Bügelstab eine Länge von mehr als 60 cm aufweist.

Um den Kescher stets einsatzbereit zu halten, ist der auf den Bügel aufgeschobene Netzbeutel an einer an dem Anschlußstück angeordneten Öse befestigt.

Die Erfindung wird an einem Ausführungsbeispiel näher erläutert. In der zugehörigen Zeichnung zeigen:
- Fig. 1: die Vorderansicht eines Keschers in Gebrauchsstellung,
- Fig. 2: die Vorderansicht des Anschlußstückes des Keschers in geöffneter Stellung mit Teil 2 ohne vordere Seitenführung,
- Fig. 3: die Vorderansicht des Klappgelenkes des Keschers in teilweise geschnittener Darstellung,
- Fig. 4: die Vorderansicht des Keschers nach Fig. 1 in Transportstellung
- Fig. 5: die Vorderansicht einer weiteren Ausführungsform des Keschers in Gebrauchsstellung
- Fig. 6: die Vorderansicht des Keschers nach Fig. 5 in Transportstellung
- Fig. 7: den Schnitt A-A nach Fig. 6

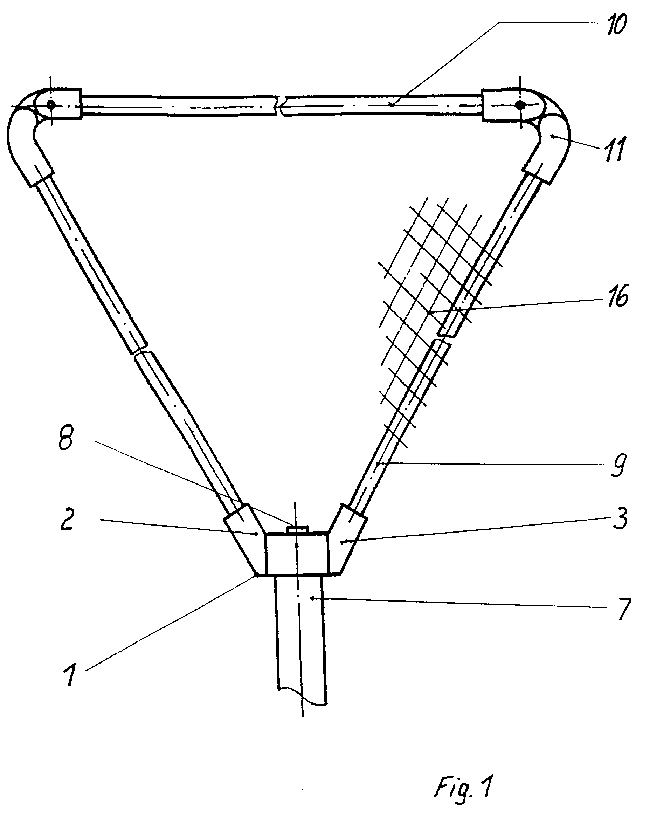

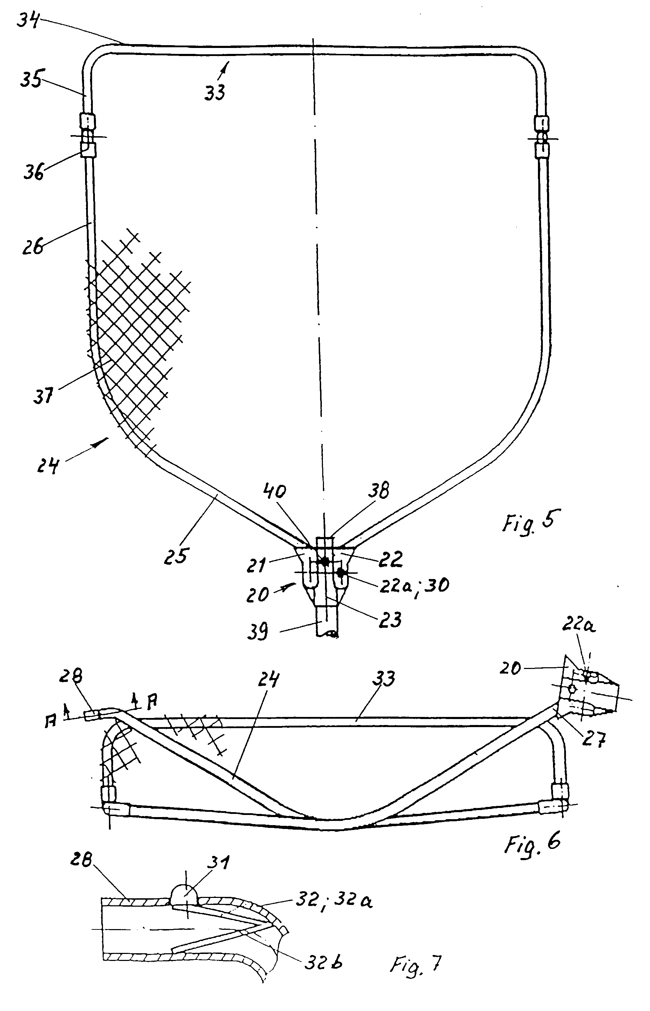

In den Fig. 1 bis 4 ist eine Ausführungsform des Keschers und in den Fig. 5 bis 7 eine weitere Ausführungsform gezeigt.

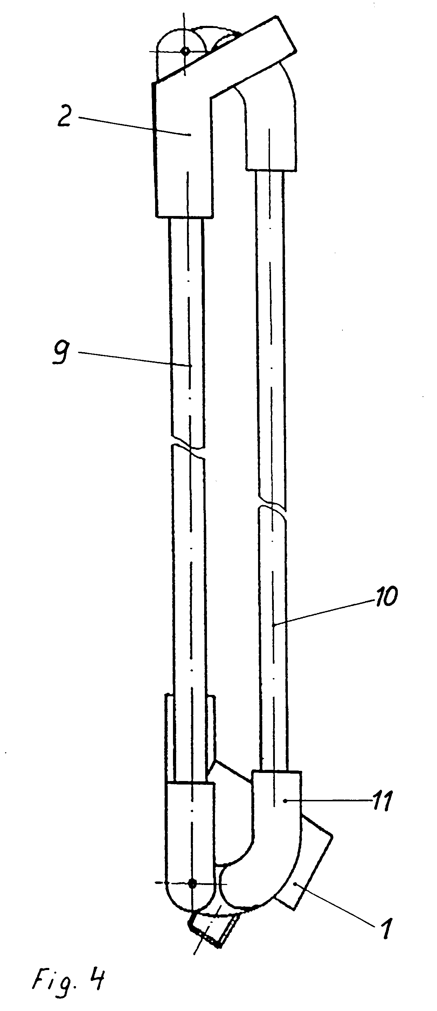

Diese Kescher weisen Bügelstäbe 9; 24, jeweils ein Anschlußstück 1; 20 sowie einen Verbindungsstab 10; 33 auf. Hierbei ist, wie in den Fig. 1 und 5 dargestellt, in der Gebrauchsstellung zwischen den oberen Enden der Bügelstäbe 9; 24, dem Anschlußstück 1; 20 gegenüberliegend, der Verbindungsstab 10; 33 gelenkig angeordnet. Der Verbindungsstab 10; 33 bildet dabei den vorderen Abschluß des Bügels des Keschers. Die unteren Enden der Bügelstäbe 9; 24 sind mit dem Anschlußstück 1; 20 verbunden. Dadurch hat der Kescher einen einfachen konstruktiven Aufbau sowie einen stabilen Bügel, so daß er für das Keschern von Großfischen beim Angelsport sehr gut geeignet ist. In Transportstellung werden die Bügelstäbe 9; 24, wie nachstehend beschrieben, voneinander gelöst. Wie in den Fig. 4 und 7 gezeigt, ist von dem oberen Ende eines der Bügelstäbe 9; 24 der Verbindungsstab nach unten geklappt, und der zweite Bügelstab 9; 24 ist an diesem nach oben geklappt. Die Bügelstäbe 9; 24 liegen dadurch mit dem Verbindungsstab 10; 33 parallel zueinander. Damit ist es möglich, auch in schwierigem Gelände einen Kescher mit großen Abmessungen zu transportieren.

In Fig. 1 ist eine Ausführungsform des Keschers in Gebrauchsstellung gezeigt.

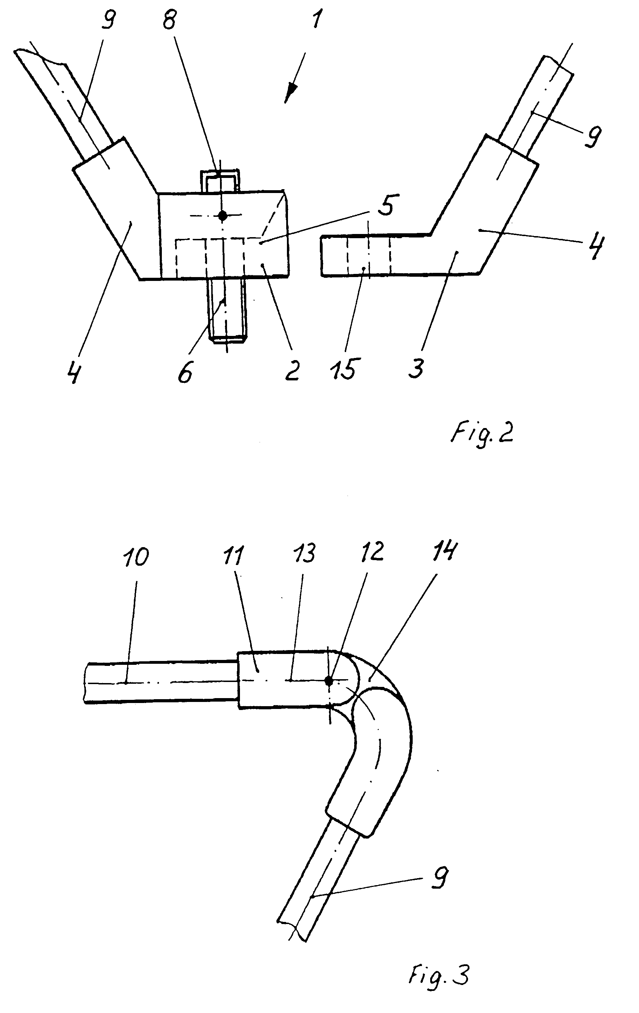

An einem Anschlußstück 1, welches in Fig. 2 näher dargestellt ist, sind die Bügelstäbe 9 V-förmig angeordnet. Die Bügelstäbe 9 bilden dabei mit dem Anschlußstück 1 die Spitze eines Dreiecks, dessen Basis gegenüberliegend durch den zwischen den vorderen Enden der Bügelstäbe 9 angeordneten Verbindungsstab 10 gebildet ist. Dabei sind die Bügelstäbe 9 mit dem Verbindungsstab 10 durch Klappgelenke 11 verbunden.

Das Anschlußstück 1 besteht, wie in Fig. 2 dargestellt, aus zwei Teilen 2; 3. Diese sind miteinander formschlüssig verbindbar. Hierzu weist das Teil 2 eine Seitenführung 5 auf, zwischen die das Teil 3 einsteckbar ist. An beiden Teilen 2; 3 sind Winkelstücke 4 fest angeordnet. Dabei ist an dem Teil 2, welches das Teil 3 übergreift, auf der seinem Winkelstück 4 gegenüberliegenden Seite eine Schräge angeordnet. An dieser liegt das Teil 3 mit dem unteren Ende seines Winkelstückes 4 an. Durch diese Ausbildung wird eine allseitige, leicht lösbare formschlüssige Verbindung erreicht. Bei der Montage des Keschers wird das formschlüssig verbundene Anschlußstück 1 kraftschlüssig fixiert. Hierzu ist in dem oberen Teil 2 ein Gewindebolzen 6 vorzugsweise mit einem Kerbstift fest angeordnet.

Dieser ragt durch eine Öffnung 15 im Teil 3 des Anschlußstückes 1. Beide Teile 2; 3 werden dann durch eine Schraubverbindung fest verbunden. Hierbei ist es zweckmäßig, wenn im oberen Teil des Stockes 7 des Keschers ein Gewindestück angeordnet ist und damit diese Verbindung erfolgt.

Die Bügelstäbe 9 sind, wie in Fig. 1 und 2 dargestellt, fest in den Winkelstücken 4 des Anschlußstückes 1 angeordnet. Die Anordnung in den Winkelstücken 4 bestimmt ihre Winkelstellung.

In Fig. 3 ist das Klappgelenk 11, welches den Bügelstab 9 mit dem Verbindungsstab 10 verbindet, gezeigt. Dabei ist an dem Verbindungsstab 10 ein U-förmiges Teil 13 angeordnet, welches als Lager zur Aufnahme eines Teiles 14, das mit dem Bügelstab 9 verbunden ist, dient. Dieses Teil 14 wird zwischen die Schenkel des U-förmigen Teiles 13 gesteckt und schwenkbar auf einem Lagerbolzen 12 gelagert. Dabei erfolgt die Lagerung so, daß die Bügelstäbe 9 und der Verbindungsstab 10 gegeneinander geklappt werden können.

Durch diese erfindungsgemäße Lösung wird eine stabile Ausbildung des Keschers auch bei einer größeren Abmessung erreicht. Dabei können die Bügelstäbe 9 eine Länge über 60 cm besitzen. Vorzugsweise weisen die Bügelstäbe 9 und der Verbindungsstab 10 einen gleichen Durchmesser auf.

Der Verbindungsstab 10 ist zweckmäßigerweise gleich lang oder länger als der Bügelstab 9. Damit besitzt der Kescher an seiner Vorderseite eine große Breite, wie sie zur Aufnahme von Fischen vorteilhaft ist.

Die Bügelstäbe 9 und der Verbindungsstab 10 bestehen vorzugsweise aus einem faserverstärkten Kunststoff. Hierfür sind besonders glasfaserverstärkte Stäbe geeignet, bei denen die Fasern in Längsrichtung angeordnet sind. Für besondere Zwecke, speziell den Wettkampfsport, können auch kohlefaserverstärkte Stäbe eingesetzt werden. Letztere sind teurer, aber durch sie ist es möglich, das Eigengewicht des Keschers zu verringern.

In Fig. 4 ist der Kescher in Transportstellung gezeigt. Für die Transportstellung werden der Stock 7 abgeschraubt und die beiden Teile 2; 3 des Anschlußstückes 1 voneinander getrennt. Danach werden die Bügelstäbe 9 gegen den Verbindungsstab 10 geklappt. Nunmehr liegen diese Stäbe parallel zueinander, und der Kescher kann auch in schwierigem Gelände transportiert werden. Beim Zusammenlegen des Keschers kann der Netzbeutel 16 auf den Bügelstäben 9 und dem Verbindungsstab 10 aufgeschoben bleiben, so daß der Kescher wieder leicht in die Gebrauchsstellung gebracht werden kann.

In den Fig. 5 bis 7 ist eine weitere Ausführungsform des Keschers gezeigt. Dabei sind, wie in Fig. 5 gezeigt, an dem Anschlußstück 20 die Bügelstäbe 24 ebenfalls V-förmig angeordnet.

Das Anschlußstück 20 weist dabei eine feste Bügelaufnahme 21 sowie eine freie Bügelaufnahme 22 auf. In der freien Bügelaufnahme 22 ist eine Öffnung 22a (Fig. 6) für eine Steckverbindung 30 vorgesehen. Die Bügelaufnahmen 21; 22 sind parallel zur Längsachse des Keschers an beiden Seiten des Anschlußstückes 20 angeordnet. Zwischen den Bügelaufnahmen 21; 22 befindet sich im Anschlußstück 20 eine nach unten offene Stockaufnahme 23.

Jeder Bügelstab 24 weist ein vertikales unteres Ende 27; 28 auf, mit dem er in die Bügelaufnahmen 21; 22 gesteckt wird.

Einer der Bügelstäbe 24 ist mit seinem unteren Ende 27 fest mit der Bügelaufnahme 21 verbunden. Der zweite Bügelstab 24 bildet mit seinem freien vertikalen Ende 28 eine Steckverbindung 30. Eine zweckmäßige Ausbildung der Steckverbindung 30 ist in Fig. 7 gezeigt.

In dem freien Ende 28 des Bügelstabes 24 ist eine Feder 32, vorzugsweise eine gebogene Blattfeder, angeordnet. An einem Schenkel 32a derselben ist ein Druckknopf 31 befestigt, der durch eine seitliche Öffnung in dem Bügelstab 24 nach außen ragt. Der andere Schenkel 32b liegt an der gegenüberliegenden Innenseite des Bügelstabes 24 an. Der Sitz der Steckverbindung 30 kann dadurch verbessert werden, daß die Feder 32 sich mit ihrem geschlossenen Ende an dem V-förmigen Abschnitt des Bügelstabes 24 abstützt.

In der in Fig. 5 gezeigten Stellung greift nach dem Zusammenstecken der Druckknopf 31 in die Öffnung 22a ein und fixiert dadurch den Bügelstab 24 in seiner Lage und damit den Kescher in der Gebrauchsstellung.

Von dem Anschlußstück 20 erstrecken sich die Bügelstäbe 24 über V-förmige Abschnitte 25 seitlich nach oben, bis der Kescher seine vorbestimmte Breite erreicht hat. An den V-förmigen Abschnitt 25 jedes der beiden Bügelstäbe 24 schließt sich ein nach oben gerichteter gerader Abschnitt 26 an. Die geraden Abschnitte 26 liegen parallel zur Längsachse des Keschers und weisen einen gleichen Abstand zu dieser auf.

An den oberen Enden dieses Abschnitts 26 ist jeweils ein Klappgelenk 26 angeordnet. Über diese Klappgelenke 36 sind die Bügelstäbe 24 durch einen U-förmigen Verbindungsstab 33 miteinander verbunden und bilden mit diesem gemeinsam den Bügel des Keschers.

Der Verbindungsstab 33 weist einen den vorderen Abschluß des Keschers bildenden Querstab 34 sowie an dessen beiden Enden rechtwinklig in Richtung der Bügelstäbe 24 gebogene sowie axial zu diesen verlaufende Schenkel 35 auf. Zwischen dem unteren Ende des Schenkels 35 und dem oberen Ende des entsprechenden Bügelstabes 24 befindet sich das zugehörige Klappgelenk 36. Damit sind die Klappgelenke 36 an den Längsseiten des Keschers angeordnet. Hierdurch wird die Gefahr eines Verhakens des Keschers mit den Klappgelenken 36 in Wasserpflanzen bedeutend verringert.

Die Klappgelenke 36 sind, wie anhand der Fig. 3 beschrieben, in an sich bekannter Weise ausgebildet. Vorzugsweise ist dabei an dem Bügelstab 24 der U-förmige Teil angeordnet, welcher als Lager zur Aufnahme des mit dem Schenkel 35 des U-förmigen Verbindungsstabes 33 verbundenen Teiles dient. Dieser Teil ist zwischen die Schenkel des U-förmigen Teiles gesteckt und schwenkbar auf einem Lagerbolzen gelagert. Dabei erfolgt die Lagerung so, daß die Bügelstäbe 24 und der U-förmige Verbindungsstab 33 gegeneinander klappbar sind.

Die Bügelstäbe 24 und der U-förmige Verbindungsstab 33 bestehen vorzugsweise aus Aluminiumrohr.

Durch die erfindungsgemäße Lösung wird bei einem relativ geringen Gewicht eine stabile Ausbildung des Keschers auch bei einer größeren Abmessung erreicht. Dabei können die Bügelstäbe 24 eine Länge von über 60 cm besitzen. Vorzugsweise weisen die Bügelstäbe 24 und der Verbindungsstab 33 einen gleichen Durchmesser auf. Der Querstab 34 des Verbindungsstabes 33 hat etwa die gleiche Länge wie der Bügelstab 24. Damit besitzt dieser Kescher an seiner Vorderseite ebenfalls eine große Breite, wie sie zur Aufnahme von Fischen vorteilhaft ist.

Auf den durch die Bügelstäbe 24 und den U-förmigen Verbindungsstab 33 gebildeten Bügel ist der Netzbeutel 37 in an sich bekannter Weise aufgeschoben. Er wird dabei mit seinem hinteren Ende an einer an dem Anschlußstück 20 angeordneten Öse 38 gehalten. In der Stockaufnahme 23 des Anschlußstückes 20 ist der Stock 39 des Keschers lösbar befestigt. Dieses kann, wie in Fig. 6 gezeigt, über eine Steckverbindung 40 erfolgen.

In Fig. 6 ist der Kescher in Transportstellung gezeigt. Für die Transportstellung ist der Stock 39 entfernt. Das freie Ende 28 von einem der Bügelstäbe 24 ist aus der freien Bügelaufnahme 22 des Anschlußstückes 20 herausgezogen, während der zweite Bügelstab 24 mit diesem fest verbunden bleibt. Danach werden die Bügelstäbe 24 über die Klappgelenke 36 gegen den U-förmigen Verbindungsstab 33 geklappt, so daß sie parallel zu dem Querstab 34 liegen.

In der Transportstellung kann der Netzbeutel 37 auf den Bügelstäben 24 sowie dem Verbindungsstab 33 aufgeschoben bleiben, so daß der Kescher wieder leicht in Gebrauchsstellung gebracht werden kann.

Es ist natürlich auch möglich, die Bügelstäbe 24 als gerade in das Anschlußstück 20 V-förmig eingesteckte Stäbe auszubilden. Dabei sind dann die Schenkel 35 des Verbindungsstabes 33 in einem Winkel < 90° zu dem Querstab 34 gebogen. Die Klappgelenke 36 sind dabei ebenfalls an den Längsseiten des Keschers zwischen den Bügelstäben 24 und den Schenkeln 35 angeordnet.

### Aufstellung der verwendeten Bezugszeichen

- 1: Anschlußstück
- 2: Teil
- 3: Teil
- 4: Winkelstück
- 5: Seitenführung
- 6: Gewindebolzen
- 7: Stock
- 8: Öse
- 9: Bügelstab
- 10: Verbindungsstab
- 11: Klappgelenk
- 12: Lagerbolzen
- 13: U-förmiges Teil
- 14: Teil
- 15: Öffnung
- 16: Netzbeutel
- 20: Anschlußstück
- 21: feste Bügelaufnahme
- 22: freie Bügelaufnahme
- 22a: Öffnung
- 23: Stockaufnahme
- 24: Bügelstab
- 25: V-förmiger Abschnitt
- 26: gerader Abschnitt
- 27: Ende
- 28: freies Ende
- 30: Steckverbindung
- 31: Druckknopf
- 32: Feder
- 32a: Schenkel
- 32b: Schenkel
- 33: Verbindungsstab
- 34: Querstab
- 35: Schenkel
- 36: Klappgelenk
- 37: Netzbeutel
- 38: Öse
- 39: Stock
- 40: Steckverbindung

## Patentansprüche

1. Kescher, insbesondere für den Fischfang, welcher Bügelstäbe, einen Verbindungsstab, einen Netzbeutel sowie ein Anschlußstück aufweist, wobei in der Gebrauchsstellung die Bügelstäbe mit ihren unteren Enden mit dem Anschlußstück kraft- und/oder formschlüssig und durch dasselbe miteinander verbunden sind sowie mit ihren oberen Enden, dem Anschlußstück gegenüberliegend, über jeweils ein Klappgelenk mit dem Verbindungsstab verbunden sind und bis zur vorbestimmten Breite des Keschers eine von dem Anschlußstück in Richtung des Verbindungsstabes V-förmig auseinandergehende Stellung einnehmen, wobei in der Transportstellung die Bügelstäbe an ihren unteren Enden voneinander gelöst sind und über die Klappgelenke an ihren oberen Enden parallel zu dem Verbindungsstab gelegt sind, dadurch gekennzeichnet, daß das Anschlußstück (1) zwei Teile (2;3), mit jeweils einem Winkelstück (4), aufweist, wobei in jedem Winkelstück (4) ein Bügelstab (9), mit seinem unteren Ende, fest angeordnet ist und die Bügelstäbe (9) durch die Winkelstücke (4) in einem vorbestimmten Winkel, entsprechend der V-förmig auseinander gehenden Stellung, fixiert sind, wobei zur formschlüssigen Verbindung der Teile (2;3) des Anschlußstückes (1), ein Teil (2) des Anschlußstückes (1), das andere Teil (3) seitlich übergreifend ausgebildet ist und in dem seitlich übergreifenden Teil (2), auf der dem Winkelstück (4) gegenüberliegenden Seite, eine Schräge angeordnet ist an der das andere Teil (3) mit seinem Winkelstück (4) anliegt und die kraftschlüssige Verbindung durch einen vertikal angeordneten Gewindebolzen (6) und einnem, an seinem vorderen Ende,mit einem Gewindestück versehenen Stock (7) des Keschers erfolgt, wobei der Gewindebolzen (6) in dem seitlich übergreifenden Teil (2) fest angeordnet ist und durch eine Öffnung (15) im zweiten Teil (3) nach unten hindurchragt.

2. Kescher nach Anspruch 1, dadurch, gekennzeichnet, daß die Bügelstäbe (9) und der Verbindungsstab (10) aus einem faserverstärkten Kunststoff bestehen.

3. Kescher, insbesondere für den Fischfang, welcher Bügelstäbe, einen Verbindungsstab, einen Netzbeutel sowie ein Anschlußstück aufweist, wobei in der Gebrauchsstellung die Bügelstäbe mit ihren unteren Enden mit dem Anschlußstück kraft- und/oder formschlüssig und durch dasselbe miteinander verbunden sind sowie mit ihren oberen Enden, dem Anschlußstück gegenüberliegend, über jeweils ein Klappgelenk mit dem Verbindungsstab verbunden sind und bis zur vorbestimmten Breite des Keschers eine von dem Anschlußstück in Richtung des Verbindungsstabes V-förmig auseinandergehende Stellung einnehmen, wobei in der Transportstellung die Bügelstäbe an ihren unteren Enden voneinander gelöst sind und über die Klappgelenke an ihren oberen Enden parallel zu dem Verbindungsstab gelegt sind, gekennzeichnet durch die Kombination folgender Merkmale:
- das Anschlußstück (20) ist einteilig ausgebildet und weist eine feste Bügelaufnahme (21) sowie eine freie Bügelaufnahme (22) auf;
- in der festen Bügelaufnahme (21) des Anschlußstückes (20) ist einer der Bügelstäbe (24) mit seinem unteren Ende befestigt;
- in der freien Bügelaufnahme (22) des Anschlußstückes (20) ist der zweite Bügelstab (24) mit seinem freien unteren Ende (28) über eine Steckverbindung (30) lösbar angeordnet;
- die Steckverbindung (30) ist durch eine in dem freien Ende (28) des Bügelstabes (24) angeordnete Feder (32), vorzugsweise eine gebogene Blattfeder, auf deren einem Schenkel (32a) ein durch eine seitliche Öffnung im Bügelstab (24) ragender Druckknopf (31) befestigt ist, wobei der andere Schenkel (32b) der Feder (32) an der gegenüberliegenden Innenseite des Bügelstabes (24) anliegt, sowie eine in der freien Bügelaufnahme (22) des Anschlußstückes (20) angeordnete Öffnung (22a) gebildet, wobei in der Gebrauchsstellung in diese Öffnung (22a) der Druckknopf (31) eingreift und den Bügelstab (24) in seiner Lage fixiert;
- die Bügelstäbe (24) einen sich von dem Anschlußstück (20) bis zum Erreichen einer vorbestimmten Breite des Keschers seitlich nach oben erstreckenden V-förmigen Abschnitt (25) aufweisen, an dem sich ein gerader Abschnitt (26) anschließt, der parallel zur Längsachse des Keschers verläuft, wobei die geraden Abschnitte (26) beider Bügelstäbe (24) einen gleichen Abstand zu der Längsachse aufweisen.

4. Kescher nach Anspruch 3, dadurch gekennzeichnet, daß der die Bügelstäbe (24) an ihren oberen Enden über die Klappgelenke (36) verbindende Verbindungsstab (33) aus einem den vorderen Abschluß des Bügels des Keschers bildenden Querstab (34) und an dessen Enden in Richtung der Bügelstäbe (24) rechtwinklig abgebogenen Schenkeln (35) besteht, die sich axial zu den geraden Abschnitten (26) der Bügelstäbe (24) erstrecken.

5. Kescher nach Anspruch 3, dadurch gekennzeichnet, daß die Bügelstäbe (24) und der Verbindungsstab (33) aus einem Leichtmetallrohr bestehen.

6. Kescher nach einem oder mehreren der Ansprüche 1 bis 5, dadurch gekennzeichnet, daß das Klappgelenk (11; 36) ein U-förmiges Teil (13) und ein weiteres Teil (14) aufweist, wobei das U-förmige Teil (13) als ein Lager zur Aufnahme des Teiles (14) ausgebildet ist, das zwischen die Schenkel des U-förmigen Teiles (13) gesteckt und schwenkbar auf einem in den Schenkeln befestigten Lagerbolzen (12) angeordnet ist, wobei eines der Teile (13; 14) an dem Verbindungsstab (10; 33) und das andere Teil (13; 14) an dem Bügelstab (9; 24) angeordnet ist.

7. Kescher nach einem oder mehreren der Ansprüche 1 bis 6, dadurch gekennzeichnet, daß das Klappgelenk (11) als eine Eckverbindung zwischen dem Verbindungsstab (10) und den Bügelstäben (9) ausgebildet ist, wobei das in das U-förmige Teil (13) eingreifende Teil (12) winkelförmig entlang der sich im Bereich der Eckverbindung kreuzenden Längsachsen des Verbindungsstabes (10) und der Bügelstäbe (9) gebogen ist.

8. Kescher nach einem oder mehreren der Ansprüche 1 bis 7, dadurch gekennzeichnet, daß der Verbindungsstab (10) oder der Querstab (34) des Verbindungsstabes (33) gleich lang oder länger als der Bügelstab (9; 24) ist.

9. Kescher nach einem oder mehreren der Ansprüche 1 bis 8, dadurch gekennzeichnet, daß der Bügelstab (9; 24) eine Länge von mehr als 60 cm aufweist.

10. Kescher nach einem oder mehreren der Ansprüche 1 bis 9, dadurch gekennzeichnet, daß der auf den Bügel des Keschers aufgeschobene Netzbeutel (16; 37) an einer an dem Anschlußstück (1; 20) angeordneten Öse (8; 38) befestigt ist.

## Claims

1. Landing-net, in particular for fishing, which has frame rods, a connecting rod, a net and a connector, the frame rods, in the use position, being connected, by way of their bottom ends, in a frictionally and/or positively locking manner to the connector and, by means of the latter, to one another and being connected, by way of their top ends, located opposite the connector, to the connecting rod, via in each case one swing-action hinge, and, up to the predetermined width of the landing-net, assuming a position in which the frame rods diverge in a V-shape, from the connector, in the direction of the connecting rod, and the frame rods, in the transport position, being released from one another at their bottom ends and being positioned parallel to the connecting rod via the swing-action hinges at their top ends, characterized in that the connector (1) has two parts (2; 3) with in each case one angle piece (4), the bottom end of a frame rod (9) being arranged fixedly in each angle piece (4), and the frame rods (9) being fixed, by the angle pieces (4), at a predetermined angle corresponding to the position in which they diverge in a V-shape, and, for the positively locking connection of the parts (2; 3) of the connector (1), one part (2) of the connector (1) is designed so as to encompass the other part (3) laterally, and a slope is arranged in the laterally encompassing part (2), on the side located opposite the angle piece (4), and the other part (3) butts against said slope by means of its angle piece (4), and the frictionally locking connection is effected by a vertically arranged threaded bolt (6) and a landing-net shaft (7) which is provided with a threaded piece at its front end, the threaded bolt (6) being arranged fixedly in the laterally encompassing part (2) and projecting downwards through an opening (15) in the second part (3).

2. Landing-net according to Claim 1, characterized in that the frame rods (9) and the connecting rod (10) consist of a fibre-reinforced plastic.

3. Landing-net, in particular for fishing, which has frame rods, a connecting rod, a net and a connector, the frame rods, in the use position, being connected, by way of their bottom ends, in a frictionally and/or positively locking manner to the connector and, by means of the latter, to one another and being connected, by way of their top ends, located opposite the connector, to the connecting rod, via in each case one swing-action hinge, and, up to the predetermined width of the landing-net, assuming a position in which the frame rods diverge in a V-shape, from the connector, in the direction of the connecting rod, and the frame rods, in the transport position, being released from one another at their bottom ends and being positioned parallel to the connecting rod via the swing-action hinges at their top ends, characterized by the combination of the following features:
- the connector (20) is designed as a single part and has a fixed frame socket (21) and a free frame socket (22);
- the bottom end of one of the frame rods (24) is fastened in the fixed frame socket (21) of the connector (20);
- the free, bottom end (28) of the second frame rod (24) is arranged releasably, via a plug-in connection (30), in the free frame socket (22) of the connector (20);
- the plug-in connection (30) is formed by a spring (32), preferably a bent leaf spring, which is arranged in the free end (28) of the frame rod (24) and on one leg (32a) of which there is fastened a push-button (31) which projects through a lateral opening in the frame rod (24), the other leg (32b) of the spring (32) butting against the opposite inner side of the frame rod (24), and is also formed by an opening (22a) which is arranged in the free frame socket (22) of the connector (20), it being the case, in the use position, that the push-button (31) engages in said opening (22a) and fixes the frame rod (24) in position;
- the frame rods (24) have a V-shaped section (25) which extends laterally upwards, from the connector (20), until a predetermined width of the landing-net is reached and which is adjoined by a rectilinear section (26) which runs parallel to the longitudinal axis of the landing-net, the rectilinear sections (26) of the two frame rods (24) being spaced apart by the same distance from the longitudinal axis.

4. Landing-net according to Claim 3, characterized in that the connecting rod (33), which connects the frame rods (24) at their top ends via the swing-action hinges (36), comprises a transverse rod (34), which forms the front termination of the landing-net frame, and legs (35) which are bent at right angles, at the ends of said transverse rod, in the direction of the frame rods (24) and extend axially to the rectilinear sections (26) of the frame rods (24).

5. Landing-net according to Claim 3, characterized in that the frame rods (24) and the connecting rod (33) comprise a light-metal tube.

6. Landing-net according to one or more of Claims 1 to 5, characterized in that the swing-action hinge (11; 36) has a U-shaped part (13) and a further part (14), the U-shaped part (13) being designed as a bearing for receiving the part (14) which is inserted between the legs of the U-shaped part (13) and is arranged pivotably on a bearing pin (12) fastened in the legs, one of the parts (13; 14) being arranged on the connecting rod (10; 33) and the other part (13; 14) being arranged on the frame rod (9; 24).

7. Landing-net according to one or more of Claims 1 to 6, characterized in that the swing-action hinge (11) is designed as a corner connection between the connecting rod (10) and the frame rods (9), the part (12) [sic] which engages in the U-shaped part (13) being bent at an angle along the longitudinal axes of the connecting rod (10) and of the frame rods (9), said longitudinal axes intersecting in the region of the corner connection.

8. Landing-net according to one or more of Claims 1 to 7, characterized in that the connecting rod (10), or the transverse rod (34) of the connecting rod (33), is of the same length as, or is longer than, the frame rod (9; 24).

9. Landing-net according to one or more of Claims 1 to 8, characterized in that the frame rod (9; 24) has a length of more than 60 cm.

10. Landing-net according to one or more of Claims 1 to 9, characterized in that the net (16; 37) pushed onto the frame of the landing-net is fastened on an eyelet (8; 38) arranged on the connector (1; 20).

## Revendications

1. Epuisette, notamment pour la pêche, qui présente des branches, une barre de jonction, un filet ainsi qu'une pièce de raccordement, dans laquelle, en position d'utilisation, les branches sont assemblées de façon mécanique et/ou géométrique par leurs extrémités inférieures avec la pièce de raccordement et sont assemblées l'une à l'autre par l'intermédiaire de celle-ci tandis que, par leurs extrémités supérieures à l'opposé de la pièce de raccordement, elles sont respectivement assemblées à la barre de jonction par une articulation à charnière et prennent, jusqu'à la largeur prédéterminée de l'épuisette, une position s'évasant en forme de V à partir de la pièce de raccordement en direction de la barre de jonction, et dans laquelle, en position de transport, les branches sont séparées l'une de l'autre à leurs extrémités inférieures et sont disposées parallèlement à la barre de jonction par l'intermédiaire des articulations à charnière à leurs extrémités supérieures, caractérisée en ce que la pièce de raccordement (1) présente deux parties (2; 3), chacune avec un coude (4), une branche (9) étant disposée de façon fixe par son extrémité inférieure dans chaque coude (4) et les branches (9) étant fixées par les coudes (4) à un angle prédéterminé, correspondant à la position s'évasant en forme de V et, pour l'assemblage géométrique des parties (2; 3) de la pièce de raccordement (1), une partie (2) de la pièce de raccordement (1) recouvrant latéralement l'autre partie (3) et un chanfrein étant ménagé dans la partie (2) de recouvrement latéral, sur le côté faisant face au coude (4), sur lequel l'autre partie (3) repose par son coude (4), et l'assemblage mécanique étant réalisé par une tige filetée (6) disposée verticalement et un manche (7) de l'épuisette muni d'une pièce filetée à son extrémité antérieure, la tige filetée (6) étant disposée de façon fixe dans la partie (2) de recouvrement latéral et sortant vers le bas à travers une ouverture (15) dans la seconde partie (3).

2. Epuisette suivant la revendication 1, caractérisée en ce que les branches (9) et la barre de jonction (10) se composent d'une matière plastique renforcée par des fibres.

3. Epuisette, notamment pour la pêche, qui présente des branches, une barre de jonction, un filet ainsi qu'une pièce de raccordement, dans laquelle, en position d'utilisation, les branches sont assemblées de façon mécanique et/ou géométrique par leurs extrémités inférieures avec la pièce de raccordement et sont assemblées l'une à l'autre par l'intermédiaire de celle-ci tandis que, par leurs extrémités supérieures à l'opposé de la pièce de raccordement, elles sont respectivement assemblées à la barre de jonction par une articulation à charnière et prennent, jusqu'à la largeur prédéterminée de l'épuisette, une position s'évasant en forme de V à partir de la pièce de raccordement en direction de la barre de jonction, et dans laquelle, en position de transport, les branches sont séparées l'une de l'autre à leurs extrémités inférieures et sont disposées parallèlement à la barre de jonction par l'intermédiaire des articulations à charnière à leurs extrémités supérieures, caractérisée par la combinaison des caractéristiques suivantes:
- la pièce de raccordement (20) est réalisée en une seule pièce et présente un logement de branche fixe (21) et un logement de branche libre (22);
- une des branches (24) est fixée par son extrémité inférieure dans le logement de branche fixe (21) de la pièce de raccordement (20);
- la seconde branche (24) est disposée de façon démontable, par son extrémité inférieure libre (28), au moyen d'un assemblage à emboîtement (30) dans le logement de branche libre (22) de la pièce de raccordement (20);
- l'assemblage à emboîtement (30) est formé par un ressort (32), de préférence une lame de ressort pliée, disposé dans l'extrémité libre (28) de la branche (24), sur une lamelle (32a) de laquelle est fixé un bouton-poussoir (31) passant à travers une ouverture latérale dans la branche (24), tandis que l'autre lamelle (32b) du ressort (32) s'appuie sur le côté intérieur opposé de la branche (24), ainsi que par une ouverture (22a) disposée dans le logement de branche libre (22) de la pièce de raccordement (20), le bouton-poussoir (31) s'engageant dans cette ouverture (22a) dans la position d'utilisation et fixant la branche (24) dans sa position;
- les branches (24) présentent un tronçon (25) s'étendant latéralement vers le haut en forme de V à partir de la pièce de raccordement (20) jusqu'à atteindre une largeur prédéterminée de l'épuisette, auquel se raccorde un tronçon rectiligne (26), qui est parallèle à l'axe longitudinal de l'épuisette, les tronçons rectilignes (26) des deux branches (24) se trouvant à une même distance de l'axe longitudinal.

4. Epuisette suivant la revendication 3, caractérisée en ce que la barre de jonction (33) reliant les branches (24) à leurs extrémités supérieures par l'intermédiaire des articulations à charnière (36) se compose d'une barre transversale (34) constituant la fermeture antérieure de l'armature de l'épuisette et, aux extrémités de celle-ci, des bouts (35) repliés à angle droit en direction des branches (24), qui s'étendent axialement aux tronçons rectilignes (26) des branches (24).

5. Epuisette suivant la revendication 3, caractérisée en ce que les branches (24) et la barre de jonction (33) sont constituées d'un tube en métal léger.

6. Epuisette suivant une ou plusieurs des revendications 1 à 5, caractérisée en ce que l'articulation à charnière (11; 36) présente une pièce en forme de U (13) et une autre pièce (14), la pièce en forme de U (13) constituant un palier pour recevoir la pièce (14), qui est engagée entre les ailes de la pièce en forme de U (13) et qui est disposée, de façon pivotante, sur un pivot (12) fixé dans les ailes, une des pièces (13; 14) étant disposée sur la barre de jonction (10; 33) et l'autre pièce (13; 14) étant disposée sur la branche (9; 24).

7. Epuisette suivant une ou plusieurs des revendications 1 à 6, caractérisée en ce que l'articulation à charnière (11) est constituée par un assemblage d'angle entre la barre de jonction (10) et les branches (9), la pièce (14) s'engageant dans la pièce en forme de U (13) étant pliée en un coude le long des axes longitudinaux de la barre de jonction (10) et des branches (9), qui se croisent dans la région de l'assemblage d'angle.

8. Epuisette suivant une ou plusieurs des revendications 1 à 7, caractérisée en ce que la barre de jonction (10) ou la barre transversale (34) de la barre de jonction (33) est aussi longue ou plus longue que la branche (9; 24).

9. Epuisette suivant une ou plusieurs des revendications 1 à 8, caractérisée en ce que la branche (9; 24) présente une longueur de plus de 60 cm.

10. Epuisette suivant une ou plusieurs des revendications 1 à 9, caractérisée en ce que le filet (16; 37) enfilé sur l'armature de l'épuisette est fixé à une boucle (8; 38) disposée sur la pièce de raccordement (1; 20).
